# EUROPEAN PATENT SPECIFICATION

(11) **EP 3 553 649 B1**
(45) Date of publication and mention of the grant of the patent: **03.11.2021**
(21) Application number: 17888518.2
(22) Date of filing: 18.12.2017
(51) Int. Cl.: G06F 3/14, G06F 3/16, G06F 3/00, B60K 35/00, B60R 21/0134, G02B 27/01, G06F 11/16, G06F 11/20

(54) **ELECTRONIC DEVICE FOR LINKING/SEPARATING INFORMATION BETWEEN DIGITAL DISPLAYS**
ELEKTRONISCHE VORRICHTUNG ZUR VERKNÜPFUNG/TRENNUNG VON INFORMATIONEN ZWISCHEN DIGITALEN ANZEIGEN
DISPOSITIF ÉLECTRONIQUE DE LIAISON/SÉPARATION D'INFORMATIONS ENTRE DES DISPOSITIFS D'AFFICHAGE NUMÉRIQUES

(30) Priority: 26.12.2016 KR 20160178796
(43) Date of publication of application: 16.10.2019
(73) Proprietor: Samsung Electronics Co., Ltd., Suwon-si, Gyeonggi-do 16677 (KR)
(72) Inventor: YOU, Ju Yeon, Yongin-si Gyeonggi-do 16937 (KR); CHOI, Jae Mo, Hwaseong-si Gyeonggi-do 18437 (KR); KIM, Kyu Sung, Seoul 06660 (KR); KIM, Hye Ryoung, Seoul 07034 (KR); AHN, Hyo In, Seoul 06630 (KR); YOO, Jin Seon, Seoul 07767 (KR); LEE, Sung Wook, Seoul 05834 (KR); LIM, Yong Jun, Seoul 06077 (KR)
(74) Representative: HGF
(86) International application number: PCT/KR2017/014948
(87) International publication number: WO 2018/124577

(56) References cited:
- JP-A- 2004 361 457
- JP-A- 2014 125 006
- JP-B2- 5 294 756
- KR-B1- 100 761 058
- KR-B1- 101 459 794
- KR-B1- 101 459 794
- US-A1- 2016 101 695
- US-A1- 2016 101 695

## Description

### [Technical Field]

Embodiments disclosed in the disclosure relate to a technique for interlocking/separating information between digital displays in a vehicle in accordance with driving conditions.

### [Background Art]

When a driver drives a vehicle, there is a need to continuously provide information related to the vehicle to the driver for the safety of the driver and the accident prevention. For example, when the speed of the vehicle is provided to the driver, the driver may accelerate or decelerate the vehicle depending on the situation. In addition, when the driver is provided with information about whether the vehicle is defective or not, the driver may stop the vehicle or repair the defect.

A plurality of displays capable of outputting the information may be arranged around the driver seat to provide the driver with the information. For example, the speed of the vehicle, the amount of remaining fuel, and the like may be output through a cluster, and the location of the vehicle and the like may be output through a center information display (CID).

### [Disclosure]

### [Technical Problem]

Since information output to a plurality of displays is different from each other, when an error (e.g., display damage) occurs in any one of the plurality of displays, provision of information through the corresponding display may be interrupted. For example, even if the remaining amount of engine oil falls below a reference value, the cluster may not provide this information. In this case, the driver may continue to drive the vehicle without replacing the engine oil, which may cause engine damage.

In addition, when an error occurs in any one of the plurality of displays, the driver may feel uncomfortable. For example, when an error occurs in the CID and the navigation program cannot be executed, it may be difficult for the driver who is not familiar with the area to arrive at the destination.

Embodiments disclosed in the disclosure are intended to provide an electronic device to solve the above-mentioned problems and the problems raised in the disclosure.

US 2016/101695 A1 relates to a cluster information output apparatus for a vehicle. KR 101 459 794 B1 relates to a system for monitoring defects on a digital cluster to prevent an accident by restoring lost information in real time when a digital cluster has defects. JP 2004 361457 A relates to providing a multi-screen display device which can display image signals of a high level of importance in spite of the occurrence of a display fault at the time of displaying the image signals.

### [Technical Solution]

According to an embodiment of the disclosure, an electronic device may include a sensor that is connected to a plurality of displays, and a multi-screen display device which can display image signals of a high level of importance in spite of the occurrence of a display fault at the time of displaying the image signals.

### [Technical Solution]

The scope of the invention is defined by the appended claims. Z

According to an embodiment of the disclosure, an electronic device includes a sensor that is connected to a plurality of displays, and a processor that is connected to the sensor and the plurality of displays, where, when information indicating that an error occurs in a first display among the plurality of displays is obtained from the sensor, the processor outputs first information to be output through the first display through a display having higher priority among remaining displays other than the first display. The processor is configured to output the first information through the display having higher priority in a pop-up form corresponding to a driving situation. The priority of the remaining displays other than the first display is higher for a display closer to the field of vision of the driver.

In addition, according to examples disclosed herein, an electronic device may include a first display that outputs first information related to a vehicle, a second display that outputs second information, a sensor that senses whether an error has occurred in the first display and the second display, and a processor that is connected to the first display, the second display, and the sensor, where, when information indicating that the error has occurred in the first display is obtained through the sensor, the processor may output the first information through the second display, and where at least a piece of the second information may be different from the first information.

In addition, according to examples disclosed herein, an electronic device may include a plurality of displays, a sensor that senses an error occurring in the plurality of displays, and a processor that is electrically connected to the plurality of displays and the sensor, where, when information indicating that an error has occurred in a first display outputting first information among the plurality of displays is obtained through the sensor, the processor may output the first information through a display having higher priority among the remaining displays.

### [Advantageous Effects]

According to the embodiments disclosed in the disclosure, an accident rate may be reduced. In addition, the convenience of a driver may be improved.

In addition, various effects that are directly or indirectly understood through the present disclosure may be provided.

### [Description of Drawings]

FIG. 1 is a sectional view of a vehicle according to an example.
FIG. 2 is a flowchart illustrating an operation of an electronic device according to an example.
FIG. 3 is a view illustrating one side of a vehicle interior according to an example.
FIG. 4 is a flowchart illustrating an operation of an electronic device for outputting information related to a vehicle corresponding to priority according to an example.
FIG. 5 is a block diagram of a system for providing information related to a vehicle to a driver according to an example.
FIG. 6 is a block diagram of a system for detecting whether an error has occurred in a display according to an example.
FIG. 7 is a view illustrating a system for controlling a display for outputting personal information based on whether an occupant is present according to an example.
FIG. 8 is a view illustrating a user interface for protecting personal information according to an example.
FIG. 9 is a view illustrating an electronic device in a network environment system according to various examples.
FIG. 10 is a block diagram illustrating an electronic device according to various examples.
FIG. 11 illustrates a block diagram illustrating a program module according to various examples.

### [Mode for Invention]

Hereinafter, various embodiments of the disclosure may be described with reference to accompanying drawings. Accordingly, those of ordinary skill in the art will recognize that modification, equivalent, and/or alternative on the various embodiments described herein can be variously made. With regard to description of drawings, similar components may be marked by similar reference numerals.

In the disclosure, the expressions "have", "may have", "include" and "comprise", or "may include" and "may comprise" used herein indicate existence of corresponding features (e.g., components such as numeric values, functions, operations, or parts) but do not exclude presence of additional features.

In the disclosure, the expressions "A or B", "at least one of A or/and B", or "one or more of A or/and B", and the like may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used in the disclosure may be used to refer to various components regardless of the order and/or the priority and to distinguish the relevant components from other components, but do not limit the components. For example, "a first user device" and "a second user device" indicate different user devices regardless of the order or priority. For example, without departing the scope of the disclosure, a first component may be referred to as a second component, and similarly, a second component may be referred to as a first component.

It will be understood that when an component (e.g., a first component) is referred to as being "(operatively or communicatively) coupled with/to" or "connected to" another component (e.g., a second component), it may be directly coupled with/to or connected to the other component or an intervening component (e.g., a third component) may be present. In contrast, when an component (e.g., a first component) is referred to as being "directly coupled with/to" or "directly connected to" another component (e.g., a second component), it should be understood that there are no intervening component (e.g., a third component).

According to the situation, the expression "configured to" used in the disclosure may be used as, for example, the expression "suitable for", "having the capacity to", "designed to", "adapted to", "made to", or "capable of'. The term "configured to" must not mean only "specifically designed to" in hardware. Instead, the expression "a device configured to" may mean that the device is "capable of' operating together with another device or other parts. For example, a "processor configured to (or set to) perform A, B, and C" may mean a dedicated processor (e.g., an embedded processor) for performing a corresponding operation or a generic-purpose processor (e.g., a central processing unit (CPU) or an application processor) which performs corresponding operations by executing one or more software programs which are stored in a memory device.

Terms used in the disclosure are used to describe specified embodiments and are not intended to limit the scope of the disclosure. The terms of a singular form may include plural forms unless otherwise specified. All the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal unless expressly so defined in various embodiments of the disclosure. In some cases, even if terms are terms which are defined in the disclosure, they may not be interpreted to exclude embodiments of the disclosure.

An electronic device according to various examples of the disclosure may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, or wearable devices. According to various examples, the wearable device may include at least one of an accessory type (e.g., watches, rings, bracelets, anklets, necklaces, glasses, contact lens, or head-mounted-devices (HMDs), a fabric or garment-integrated type (e.g., an electronic apparel), a body-attached type (e.g., a skin pad or tattoos), or a bio-implantable type (e.g., an implantable circuit).

According to various examples, the electronic device may be a home appliance. The home appliances may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSync™, Apple TV™, or Google TV™), game consoles (e.g., Xbox™ or PlayStation™), electronic dictionaries, electronic keys, camcorders, electronic picture frames, and the like.

According to another example, an electronic device may include at least one of various medical devices (e.g., various portable medical measurement devices (e.g., a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, and ultrasonic devices), navigation devices, Global Navigation Satellite System (GNSS), event data recorders (EDRs), flight data recorders (FDRs), vehicle infotainment devices, electronic equipment for vessels (e.g., navigation systems and gyrocompasses), avionics, security devices, head units for vehicles, industrial or home robots, automated teller machines (ATMs), points of sales (POSs) of stores, or internet of things (e.g., light bulbs, various sensors, electric or gas meters, sprinkler devices, fire alarms, thermostats, street lamps, toasters, exercise equipment, hot water tanks, heaters, boilers, and the like).

According to an example, the electronic device may include at least one of parts of furniture or buildings/structures, electronic boards, electronic signature receiving devices, projectors, or various measuring instruments (e.g., water meters, electricity meters, gas meters, or wave meters, and the like). According to various examples, the electronic device may be one of the above-described devices or a combination thereof. An electronic device according to an example may be a flexible electronic device. Furthermore, an electronic device according to an example of the disclosure may not be limited to the above-described electronic devices and may include other electronic devices and new electronic devices according to the development of technologies.

Hereinafter, electronic devices according to various examples will be described with reference to the accompanying drawings. In the disclosure, the term "user" may refer to a person who uses an electronic device or may refer to a device (e.g., an artificial intelligence electronic device) that uses the electronic device.

The scope of the invention is defined by the appended claims.

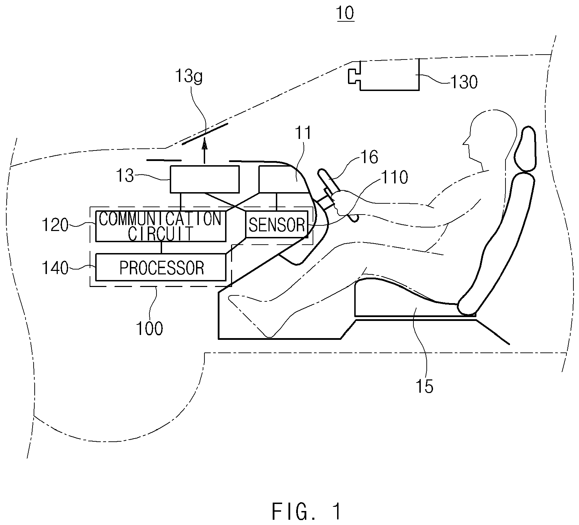

FIG. 1 is a sectional view of a vehicle according to an example. In the disclosure, information related to a vehicle includes information about the current state of the vehicle (e.g., a vehicle speed, a vehicle location, a travel path, a travel direction, and the like), information about a vehicle defect (e.g., battery discharge, brake failure, air pressures of tires, and the like), information about an occupant of the vehicle (e.g., an image of the driver), and information related to driver convenience (e.g., a traffic situation, telephone call history, recently played music, etc.).

Referring to FIG. 1, an electronic device 100 may include a sensor 110, a communication circuit 120, an internal camera 130, and a processor 140.

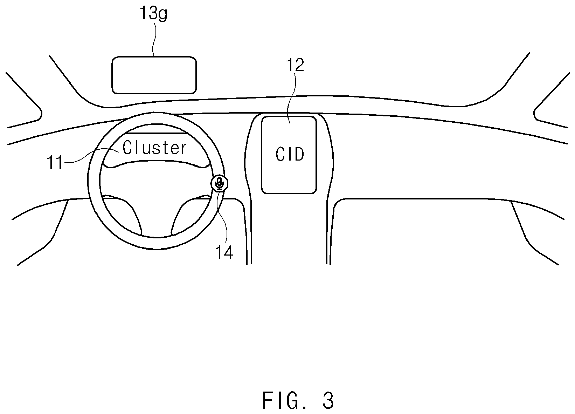

The sensor 110 may be electrically connected to a plurality of displays. For example, the sensor 110 may be electrically connected to a digital cluster 11, a center information display (CID) 12, and a head-up display (HUD) 13. In the disclosure, the display may be referred to as at least one of the digital cluster 11, the CID (e.g., the CID 12 of FIG. 3) and the head-up display 13.

The sensor 110 may detect an error occurring in each of the plurality of displays. For example, the sensor 110 may measure the magnitude of a current consumed in the display. The sensor 110 determines that the display is normal when the magnitude of the measured current is greater than a specified magnitude and may determine that an error has occurred in the display when the magnitude of the measured current is less than the specified magnitude.

Although not shown in FIG. 1, the sensor 110 may be connected to a seat of a vehicle to detect whether a person has boarded the vehicle. For example, the sensor 110 may sense whether a driver has boarded the vehicle through the weight detected in a driver seat 15.

The communication circuit 120 may communicate with the plurality of displays. For example, the communication circuit 120 may receive a signal (e.g., an on/off control signal of a display) of controlling a display from the processor 140 and transmit it to the display. In another example, the communication circuit 120 may receive a user input (e.g., executing a navigation program) from a display and transmit it to the processor 140.

The internal camera 130 may obtain an image of the inside of a vehicle 10 while rotating corresponding to a situation. For example, when a driver (or an occupant) sits on the driver seat 15 (or a passenger seat), the internal camera 130 may photograph the driver and acquire an image of the driver. In addition, the internal camera 130 may obtain images of the digital cluster 11, the CID 12, and the like by photographing the digital cluster 11, the CID 12, and the like. The image obtained through the internal camera 130 may be used to identify the driver or to determine whether an error has occurred in the display.

The processor 140 may be electrically connected to the sensor 110 and the communication circuit 120. Although not shown in FIG. 1, the processor 140 may be electrically connected to the internal camera 130.

The processor 140 may determine whether an error has occurred in a plurality of displays based on the information received from the sensor 110, the communication circuit 120, and the internal camera 130. For example, the processor 140 may determine that an error has occurred in the digital cluster 11 when the intensity of the signal received from the digital cluster 11 by the communication circuit 120 is weak. In another example, the processor 140 may determine that an error has occurred in the CID 12 when there is a corrupted portion in the image of the CID 12 received from the internal camera 130.

According to an example, the electronic device 100 may further include the digital cluster 11, the CID 12, and the HUD 13.

The digital cluster 11 may be arranged behind a steering wheel 16 based on a driver. The digital cluster 11 may output at least one of the speed of the vehicle, revolutions per minute (RPM) of the engine, the amount of remaining fuel, and whether the vehicle is defective.

The CID 12 may be arranged on the center fascia of the vehicle. The CID 12 may be configured with a display separated from the digital cluster 11 or a single display together with the digital cluster 11.

The CID 12 may output information different from information output from the digital cluster 11. For example, the CID 12 may output the location of the vehicle and information about an obstacle located near the vehicle. In another example, the CID 12 may output information related to the driver convenience, such as the title of music currently being played, weather, traffic conditions, and the like.

The HUD 13 may be arranged behind the digital cluster 11 or under the digital cluster 11 based on the driver. The light output from the HUD 13 may display information related to the vehicle in a partial area 13g of the windshield. For example, the HUD 13 may display the speed of the vehicle, a moving route, a moving direction, and the like in the partial area 13g.

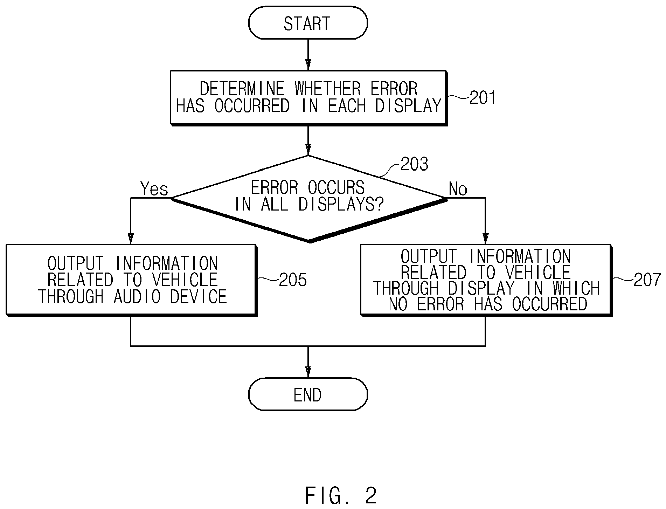

FIG. 2 is a flowchart illustrating an operation of an electronic device according to an example. The flowchart illustrated in FIG. 2 is a flowchart of the operation of the electronic device 100 illustrated in FIG. 1. In the disclosure, the details described with reference to FIG. 1 may be equally applied to the components having the same reference numerals as those of the electronic device 100 illustrated in FIG. 1.

Referring to FIG. 2, in operation 201, the electronic device 100 may determine whether an error has occurred in each of the plurality of displays. In an example, the electronic device 100 may determine whether an error has occurred in a display based on the information received from the sensor 110 or the communication circuit 120. For example, when a part of a display is damaged, any currents may not flow through the display or the magnitude of the current flowing through the display may be small. When the magnitude of the consumed current measured by the sensor 110 is smaller than a specified magnitude, the electronic device 100 may determine that an error has occurred in the display. In another example, when a fault occurs in the software of the display, the communication circuit 120 may receive a signal indicating that an error has occurred in the display. When the communication circuit 120 receives a signal indicating that an error has occurred in the display, the electronic device 100 may determine that an error has occurred in the display.

As still another example, the electronic device 100 may determine whether an error has occurred in the display based on the image obtained by the internal camera 130. For example, when the display is broken due to an external shock, the image obtained by the internal camera 130 may be different from the image of the display stored in the memory. Thus, the electronic device 100 may compare the image obtained by the internal camera with the image stored in the memory, and when the images are difference from each other, the electronic device 100 may determine that an error has occurred in the display.

In operation 203, the electronic device 100 may collect information about determination for each display to determine whether an error has occurred in all of the displays. When an error has occurred in all of the displays, in operation 205, the electronic device 100 may output information relating to the vehicle through the audio device (e.g., an audio device 14 of FIG. 3). For example, when the display mounted on the vehicle is the digital cluster 11 and the CID 12 and an error has occurred in both the digital cluster 11 and the CID 12, the electronic device 100 may convert the speed of the vehicle, the location of the vehicle, and the like into voice signals. The converted voice signal may be output through the audio device 14.

In another example, when no error has occurred in all the displays, in operation 207, the electronic device 100 may output information relating to the vehicle through the display in which no error has occurred. For example, when an error has occurred in the digital cluster 11 but no error has occurred in the CID 12, the electronic device 100 may output the speed of the vehicle through the CID 12. When an error occurs in the CID 12 but no error has occurred in the digital cluster 11 unlike the above example, the electronic device 100 may output the location of the vehicle through the digital cluster 11.

According to an example, when an error has occurred in a first display, the electronic device 100 may output information related to the vehicle through a second display at a specific time (e.g., the time when the first information is output when no error has occurred in the first display). For example, when an error has occurred in the digital cluster 11, the electronic device 100 may output the amount of remaining fuel through the CID 12 only when the fuel is almost exhausted. According to another example, when an error has occurred in the CID 12, the electronic device 100 may output traffic conditions through the digital cluster 11 only during rush hour.

According to an example, the electronic device 100 may output information relating to the vehicle through the displays and the audio device 14. For example, when no error has occurred in the digital cluster 11 but an error occurs in the CID 12, the electronic device 100 may output information to be output through the CID 12 through the audio device 14. As described in the above examples, the electronic device 100 may output the information to be output through the CID 12 through the digital cluster 11 and the audio device 14, or through the audio device 14.

According to an example, the electronic device 100 may output information related to the vehicle in a specified area of the display. For example, when an error occurs in the digital cluster 11 and information related to the vehicle is output through the CID 12, the information may be output to a periphery of an outer frame of the CID 12. According to another example, the electronic device 100 may output information related to the vehicle in a pop-up form corresponding to a driving situation. For example, when an error occurs in the CID 12 so that the information related to the vehicle is output through the digital cluster 11, the electronic device 100 may output the location of a speed camera to the digital cluster 11 in a pop-up form only when the vehicle enters a speed enforcement section.

FIG. 3 is a view illustrating one side of a vehicle interior according to an example.

Referring to FIG. 3, when an error occurs in any one of the plurality of displays, the electronic device 100 may output information related to the vehicle through a display having higher priority among the remaining displays. For example, when an error occurs in the digital cluster 11, the electronic device 100 may determine the priority between the CID 12 and the HUD 13. For convenience and safety of a driver, the priority may be higher for a display closer to the field of vision of the driver. For example, the priority of the HUD 13 among the CID 12 and the HUD 13 may be higher than the priority of the CID 12. Since the priority of the HUD 13 is higher than that of the CID 12, the information (e.g., the vehicle speed, the amount of remaining fuel, and the like) to be output through the digital cluster 11 may be output through the HUD 13.

According to one example, when an error occurs in the CID 12, the electronic device 100 may determine the priority between the digital cluster 11 and the HUD 13. When the priority of the digital cluster 11 among the digital cluster 11 and the HUD 13 is higher than that of the HUD 13, the information (e.g., the location of the vehicle, the traffic conditions, and the like) to be output through the CID 12 may be output through the digital cluster 11.

According to an example, when an error occurs in the HUD 13, the electronic device 100 may determine the priority between the digital cluster 11 and the CID 12. When the priority of the digital cluster 11 among the digital cluster 11 and the CID 12 is higher than that of the CID 12, the information (e.g., the moving path, the moving direction, and the like) to be output through the HUD 13 may be output through the digital cluster 11.

According to an example, when an error occurs in all the displays, the electronic device 100 may output the information related to the vehicle through the audio device 14. The electronic device 100 may convert the information related to the vehicle to a voice signal to output the information related to the vehicle through the audio device 14.

According to an example, when the electronic device 100 outputs a voice signal through the audio device 14, the electronic device 100 may output a voice signal corresponding to the priority of the information related to the vehicle. The priority of the information related to the safety of the driver may be higher than those of other information. For example, the information related to a vehicle defect may have higher priority than the speed of the vehicle, and the speed of the vehicle may have higher priority than the location of the vehicle. Thus, the electronic device 100 may output the information relating to defects of the vehicle, the speed of the vehicle, and the location of the vehicle in the order of the information relating to defects of the vehicle, the speed of the vehicle, and the location of the vehicle.

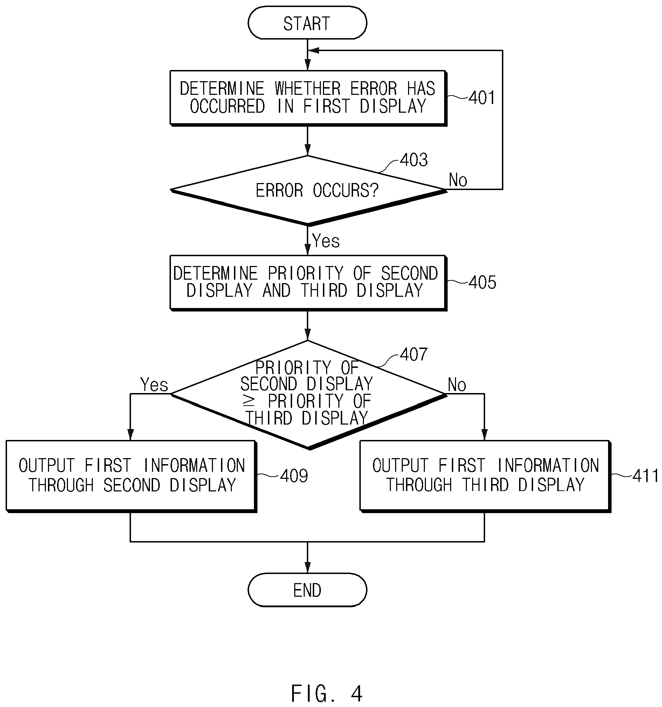

FIG. 4 is a flowchart illustrating an operation of an electronic device for outputting information related to a vehicle corresponding to priority according to an example. The flowchart illustrated in FIG. 4 illustrates the operation of the electronic device 100 illustrated in FIG. 3.

Referring to FIG. 4, in operation 401, the electronic device 100 may determine whether an error has occurred in the first display among the plurality of displays. The operation of determining whether an error has occurred may correspond to, for example, operation 201 of FIG. 2. For example, the first display may correspond to one of the digital cluster 11, the CID 12, and the HUD 13. When an error has occurred in the first display in operation 403, the electronic device 100 performs the next operation. When no error has occurred in the first display, operation 401 may be repeatedly performed.

When an error has occurred in the first display, in operation 405, the electronic device 100 may determine the priority between the second and third displays. The second and third displays may be the remaining displays except for the first display among the plurality of displays. For example, when the first display is the digital cluster 11, the second and third displays may correspond to the HUD 13 and the CID 12, respectively.

In operation 407, when the priority of the second display is higher than that of the third display, the electronic device 100 may perform operation 409. For example, when the second and third displays correspond to the HUD 13 and the CID 12, respectively, the electronic device 100 may output, through the HUD 13, the location of the vehicle, traffic conditions, and the like.

In operation 407, when the priority of the second display is lower than that of the third display, the electronic device 100 may perform operation 411. For example, when the second and third displays correspond to the HUD 13 and the digital cluster 11, respectively, the electronic device 100 may output, through the digital cluster 11, the moving path, the moving direction, and the like.

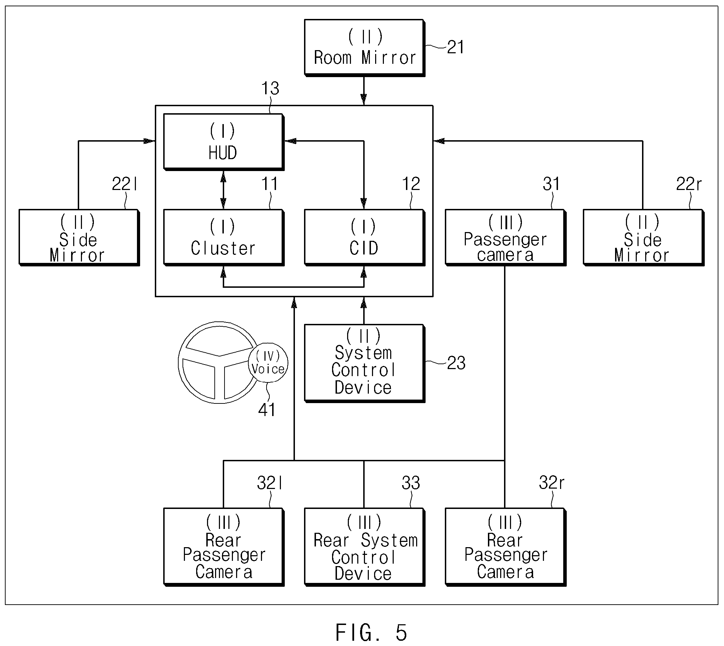

FIG. 5 is a block diagram of a system for providing information related to a vehicle to a driver according to an example.

Referring to FIG. 5, groups I, II, III, and IV shown in FIG. 5 may have different priority. For example, the priority from the first group I to the fourth group IV may be in descending order. Since the groups I to IV have different priority, the order of outputting the information obtained from the groups may be different. For example, the information obtained from a group having lower priority may be output later than the information obtained from a group having higher priority.

According to an example, the first group I may include the digital cluster 11, the CID 12 and the HUD 13. The components included in the first group (I) may correspond to the digital cluster 11, the CID 12, and the HUD 13 described in FIGS. 1 and 3, respectively.

According to an example, the second group II may include a room mirror camera 21, side mirror cameras 221 and 22r, and a system control device 23. The components included in the second group II may output information through the displays included in the first group I. For example, the images obtained through the room mirror camera 21, the images obtained through the side mirror cameras 221 and 22r (e.g., external cameras) may be outputted through the digital cluster 11. In addition, the information obtained by the system control device 23 may be output through the CID 12.

According to an example, the third group III may include a passenger seat camera 31, rear seat cameras 321 and 32r, and a rear seat system control device 33. After the information obtained in the second group II is outputted, the information obtained in the third group III may be outputted through the displays. For example, the images obtained through the passenger seat camera 31 and the rear seat cameras 321 and 32r may be output through the CID 12. In addition, the information obtained by the rear seat system control device 33 may be output through the digital cluster 11.

When an error occurs in all the displays included in the first group I, an audio device 41 may convert the information to be output through the display into a voice signal and output it.

According to an example, the priority among the components included in each group may be different. For example, the priority of the digital cluster 11, the CID 12, and the HUD 13 included in the first group I may be different. Since the priority between the digital cluster 11, the CID 12, and the HUD 13 is different, when an error occurs in any one of the digital cluster 11, the CID 12, and the HUD 13, the information related to the vehicle may be output through the display having the highest priority among the remaining displays.

Unlike the above-described example, the priority among the components included in the second group II may be different. For example, the images obtained from the side mirror cameras 221 and 22r may be output before the images obtained from the room mirror camera 21.

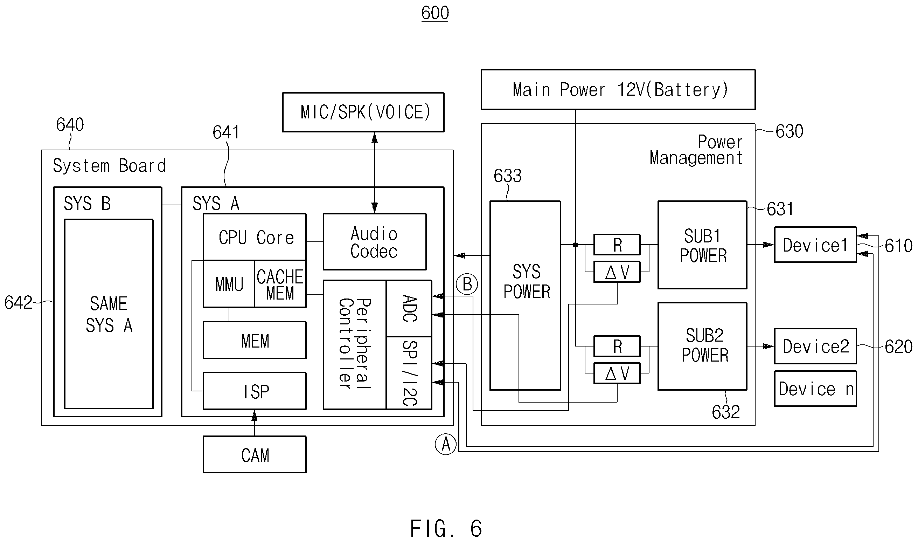

FIG. 6 is a block diagram of a system for detecting whether an error has occurred in a display according to an example.

Referring to FIG. 6, each of a plurality of devices 610 and 620 may correspond to electronic devices included in a vehicle. For example, each of the plurality of devices 610 and 620 may be any one of the digital cluster 11, the CID 12, and the HUD 13 described with reference to FIG. 1.

A power management circuit 630 may supply power to each of the plurality of devices 610 and 620 and a plurality of systems 641 and 642. According to an example, the power management circuit 630 may include a first sub-circuit 631, a second sub-circuit 632 and a system circuit 633. Each of the first and second sub-circuits 631 and 632 may supply power to the first and second devices 610 and 620, respectively. The system circuit 633 may be connected to a system board 640 to supply power to each system.

The system board 640 may include system 'A' 641 and system 'B' 642. The system 'A' 641 may determine whether an error has occurred in each of the devices 610 and 620. For example, a first processor (e.g., a communication processor) included in the system 'A' 641 may determine whether an error has occurred in each of the devices 610 and 620 based on the strength of a signal received at each of the devices 610 and 620. In addition, a second processor (e.g., an application processor) included in the system 'A' 641 may determine whether an error has occurred in each of devices 610 and 620 based on the magnitude of a current consumed by each of devices 610 and 620.

The system 'B' 642 may include substantially the same components as those included in the system 'A' 641. Therefore, the system 'B' 642 may perform substantially the same operations as the system 'A' 641. For example, when an error occurs in the system 'A' 641, the system 'B' 642 may determine whether an error has occurred in each of the devices 610 and 620.

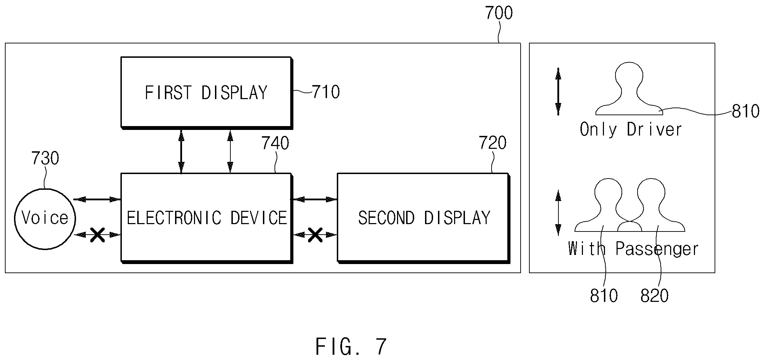

FIG. 7 is a view illustrating a system for controlling a display for outputting personal information based on whether an occupant is present according to an example.

Referring to FIG. 7, a system 700 may include a first display 710, a second display 720, an audio device 730, and an electronic device 740.

For example, each of the first and second displays 710 and 720 may correspond to the digital cluster 11 and the CID 12 described with reference to FIGS. 1 and 3. For example, the audio device 730 may correspond to the audio device 14 described with reference to FIG. 3.

When only a driver 810 boards the vehicle, the electronic device 740 may operate substantially the same as the electronic device 100 illustrated in FIG. 1. For example, when an error occurs in the first display 710, information related to the vehicle may be output through the second display 720. When an error occurs in both the first display 710 and the second display 720, the information related to the vehicle may be output through the audio device 730.

When all the driver 810 and a passenger 820 board the vehicle, the electronic device 740 may output all information only through the first display 710. The second display 720 may be located between the driver 810 and the passenger 820, so that the information output through the second display 720 may be recognized by the passenger 820 as well. For example, when personal information (e.g., call history, a text message and the like when the vehicle is paired with a smartphone) of the driver 810 is output through the second display 720, there may be a risk that the personal information of the driver 810 is exposed. Thus, when both the driver 810 and the passenger 820 board the vehicle, the electronic device 740 may output all information only through the first display 710.

According to an example, when both the driver 810 and the passenger 820 board the vehicle, the electronic device 740 may control the information to be output through the audio device 730. For example, because the information (e.g., call contents) to be output through the audio device 730 may be heard by the occupant 820, the electronic device 740 may convert the information to be output through the audio device 730 into a text form and output it to the first display 710. Unlike the above-described examples, when both the driver 810 and the occupant 820 board the vehicle, the electronic device 740 may turn off the audio device 730.

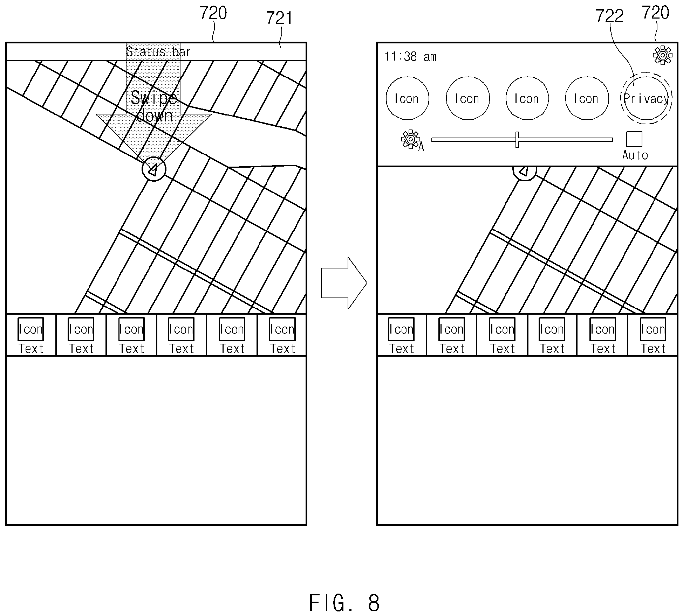

FIG. 8 is a view illustrating a user interface for protecting personal information according to an example. For example, the display illustrated in FIG. 8 may correspond to the first or second display 710 or 720 described with reference to FIG. 7.

Referring to FIG. 8, the electronic device 740 may set a personal information protection mode. For example, when the driver sweeps down a status bar 721 displayed on the display 720, an icon 722 capable of setting the personal information protection mode may be output through the display 720. When the driver clicks the icon 722, the personal information protection mode may be executed.

When the personal information protection mode is executed, personal information may be output through another display other than the display 720. For example, when the display 720 corresponds to the CID, the call history, text message, and the like may be output through the digital cluster.

According to an example of the disclosure, when a passenger boarded the vehicle, the personal information may be protected by controlling the display through which personal information is output.

According to an example of the disclosure, an electronic device may include a first display that outputs first information which is information related to a vehicle, a second display that outputs second information including personal information, a sensor that senses whether a person sits in at least one of a plurality of seats, and a processor that is electrically connected to the first display, the second display, and the sensor, where the processor may output the second information through the first display when obtaining information that the persons sit in the first and second seats, from the sensor.

According to an example of the disclosure, the first seat may correspond to a driver seat, and the second seat may correspond to a passenger seat.

According to an example of the disclosure, the sensor may sense whether a person sits on a seat, based on at least one of a weight applied to each of a plurality of seats and an image of the person obtained through an internal camera.

According to an example of the disclosure, an electronic device may include a sensor that is connected to a plurality of displays, and a processor that is connected to the sensor and the plurality of displays, where, when information indicating that an error occurs in a first display among the plurality of displays is obtained from the sensor, the processor may output first information to be output through the first display through a display having higher priority among remaining displays.

According to an example of the disclosure, the processor may convert information to be output through the plurality of displays to a voice signal and output the voice signal through an audio device when information indicating that the error occurs in the plurality of displays is obtained.

According to an example of the disclosure, the processor may allow the audio device to output voice signals in a descending order of priority.

According to an example of the disclosure, the processor may measure a magnitude of a current input to the first display through the sensor and obtain information indicating that the error occurs in the first display based on the measured magnitude of the current.

According to an example of the disclosure, the electronic device may further include a communication circuit that communicates with the first display, where the processor may obtain information indicating that the error occurs in the first display based on intensity of a signal received through the communication circuit.

According to an example of the disclosure, the electronic device may further include an internal camera that obtains an image of the first display, where the processor may obtain information indicating that the error occurs in the first display based on the image.

According to an example of the disclosure, the processor may obtain information indicating that the error occurs in the first display in accordance with a specified period.

According to an example of the disclosure, the first display may correspond to a digital cluster, and the processor may output the first information through a center information display (CID) when obtaining information indicating that the error occurs in the digital cluster.

According to an example of the disclosure, the processor may allow the CID to output at least one of a speed of the vehicle, revolutions per minute (RPM) of an engine, an amount of remaining fuel, and whether the vehicle is defective.

According to an example of the disclosure, the first display may correspond to a center information display (CID), and the processor may output the first information through a digital cluster when obtaining information indicating that an error occurs in the CID.

According to an example of the disclosure, the processor may allow the digital cluster to output at least one of a location of the vehicle and information about an obstacle located in a periphery of the vehicle.

According to an example of the disclosure, the first display may correspond to a digital cluster, and the processor may output the first information through a head-up display (HUD) when obtaining information indicating that an error occurs in the digital cluster.

According to an example of the disclosure, the electronic device may further include an external camera that obtains an image of an obstacle located in a periphery of the vehicle, where the processor may allow the first display to output the image of the obstacle obtained through the external camera.

According to an example of the disclosure, an electronic device may include a first display that outputs first information related to a vehicle, a second display that outputs second information, a sensor that senses whether an error has occurred in the first display and the second display, and a processor that is connected to the first display, the second display, and the sensor, where, when information indicating that the error has occurred in the first display is obtained through the sensor, the processor may output the first information through the second display, and where at least a piece of the second information may be different from the first information.

According to an example of the disclosure, when information indicating that an error has occurred in the first display and the second display is obtained, the processor may convert the first information and the second information into audio signals and output the audio signals through an audio device.

According to an example of the disclosure, the first display may correspond to a digital cluster and the second display may correspond to a center information display (CID).

According to an example of the disclosure, the processor may output the first information in a specified area of the second display.

According to an example of the disclosure, an electronic device may include a plurality of displays, a sensor that senses an error occurring in the plurality of displays, and a processor that is electrically connected to the plurality of displays and the sensor, where, when information indicating that an error has occurred in a first display outputting first information among the plurality of displays is obtained through the sensor, the processor may output the first information through a display having higher priority among the remaining displays.

According to an example of the disclosure, the processor may output the first information through the display having the higher priority at a time when the first information is output when the error does not occur in the first display.

According to an example of the disclosure, the processor may output the first information to a specified area of the display having the higher priority.

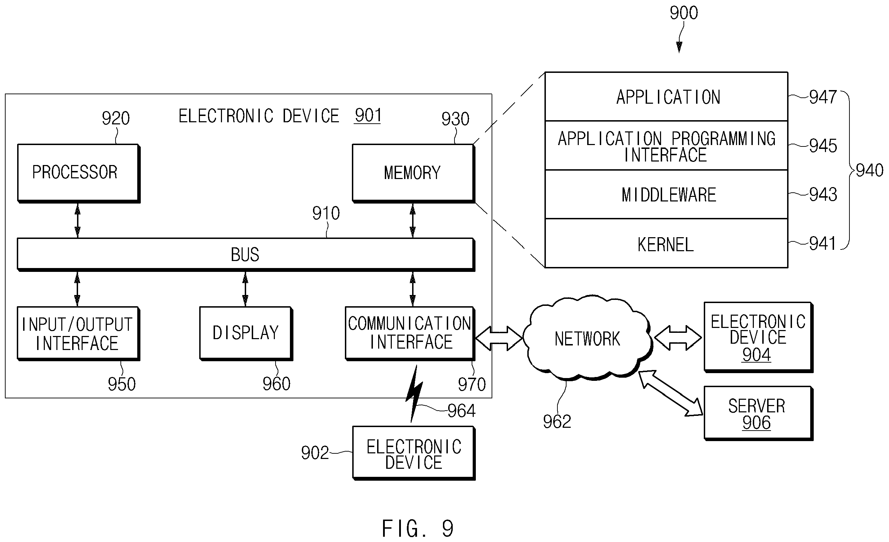

FIG. 9 is a view illustrating an electronic device in a network environment system according to various examples.

Referring to FIG. 9, according to various examples, an electronic device 901, a first electronic device 902, a second electronic device 904, or a server 906 may be connected each other over a network 962 or a short range communication 964. The electronic device 901 may include a bus 910, a processor 920, a memory 930, an input/output interface 950, a display 960, and a communication interface 970. According to an example, the electronic device 901 may not include at least one of the above-described components or may further include other component(s).

For example, the bus 910 may interconnect the above-described components 910 to 970 and may include a circuit for conveying communications (e.g., a control message and/or data) among the above-described components.

The processor 920 may include one or more of a central processing unit (CPU), an application processor (AP), or a communication processor (CP). For example, the processor 920 may perform an arithmetic operation or data processing associated with control and/or communication of at least other components of the electronic device 901.

The memory 930 may include a volatile and/or nonvolatile memory. For example, the memory 930 may store commands or data associated with at least one other component(s) of the electronic device 901. According to an example, the memory 930 may store software and/or a program 940. The program 940 may include, for example, a kernel 941, a middleware 943, an application programming interface (API) 945, and/or an application program (or "an application") 947. At least a part of the kernel 941, the middleware 943, or the API 945 may be referred to as an "operating system (OS)".

For example, the kernel 941 may control or manage system resources (e.g., the bus 910, the processor 920, the memory 930, and the like) that are used to execute operations or functions of other programs (e.g., the middleware 943, the API 945, and the application program 947). Furthermore, the kernel 941 may provide an interface that allows the middleware 943, the API 945, or the application program 947 to access discrete components of the electronic device 901 so as to control or manage system resources.

The middleware 943 may perform, for example, a mediation role such that the API 945 or the application program 947 communicates with the kernel 941 to exchange data.

Furthermore, the middleware 943 may process task requests received from the application program 947 according to a priority. For example, the middleware 943 may assign the priority, which makes it possible to use a system resource (e.g., the bus 910, the processor 920, the memory 930, or the like) of the electronic device 901, to at least one of the application program 947. For example, the middleware 943 may process the one or more task requests according to the priority assigned to the at least one, which makes it possible to perform scheduling or load balancing on the one or more task requests.

The API 945 may be, for example, an interface through which the application program 947 controls a function provided by the kernel 941 or the middleware 943, and may include, for example, at least one interface or function (e.g., an instruction) for a file control, a window control, image processing, a character control, or the like.

The input/output interface 950 may play a role, for example, of an interface which transmits a command or data input from a user or another external device, to other component(s) of the electronic device 901. Furthermore, the input/output interface 950 may output a command or data, received from other component(s) of the electronic device 901, to a user or another external device.

The display 960 may include, for example, a liquid crystal display (LCD), a light-emitting diode (LED) display, an organic LED (OLED) display, a microelectromechanical systems (MEMS) display, or an electronic paper display. The display 960 may display, for example, various contents (e.g., a text, an image, a video, an icon, a symbol, and the like) to a user. The display 960 may include a touch screen and may receive, for example, a touch, gesture, proximity, or hovering input using an electronic pen or a part of a user's body.

For example, the communication interface 970 may establish communication between the electronic device 901 and an external device (e.g., the first electronic device 902, the second electronic device 904, or the server 906). For example, the communication interface 970 may be connected to the network 962 over wireless communication or wired communication to communicate with the external device (e.g., the second electronic device 904 or the server 906).

The wireless communication may use at least one of, for example, long-term evolution (LTE), LTE Advanced (LTE-A), Code Division Multiple Access (CDMA), Wideband CDMA (WCDMA), Universal Mobile Telecommunications System (UMTS), Wireless Broadband (WiBro), Global System for Mobile Communications (GSM), or the like, as cellular communication protocol. Furthermore, the wireless communication may include, for example, the short range communication 964. The short range communication 964 may include at least one of wireless fidelity (Wi-Fi), Bluetooth, near field communication (NFC), magnetic stripe transmission (MST), a global navigation satellite system (GNSS), or the like.

The MST may generate a pulse in response to transmission data using an electromagnetic signal, and the pulse may generate a magnetic field signal. The electronic device 901 may transfer the magnetic field signal to point of sale (POS), and the POS may detect the magnetic field signal using a MST reader. The POS may recover the data by converting the detected magnetic field signal to an electrical signal.

The GNSS may include at least one of, for example, a global positioning system (GPS), a global navigation satellite system (Glonass), a Beidou navigation satellite system (hereinafter referred to as "Beidou"), or an European global satellite-based navigation system (hereinafter referred to as "Galileo") based on an available region, a bandwidth, or the like. Hereinafter, in the disclosure, "GPS" and "GNSS" may be interchangeably used. The wired communication may include at least one of, for example, a universal serial bus (USB), a high definition multimedia interface (HDMI), a recommended standard-232 (RS-232), a plain old telephone service (POTS), or the like. The network 962 may include at least one of telecommunications networks, for example, a computer network (e.g., LAN or WAN), an Internet, or a telephone network.

Each of the first and second electronic devices 902 and 904 may be a device of which the type is different from or the same as that of the electronic device 901. According to an example, the server 906 may include a group of one or more servers. According to various examples, all or a portion of operations that the electronic device 901 will perform may be executed by another or plural electronic devices (e.g., the first electronic device 902, the second electronic device 904 or the server 906). According to an example, in the case where the electronic device 901 executes any function or service automatically or in response to a request, the electronic device 901 may not perform the function or the service internally, but, alternatively additionally, it may request at least a portion of a function associated with the electronic device 901 from another device (e.g., the electronic device 902 or 904 or the server 906). The other electronic device may execute the requested function or additional function and may transmit the execution result to the electronic device 901. The electronic device 901 may provide the requested function or service using the received result or may additionally process the received result to provide the requested function or service. To this end, for example, cloud computing, distributed computing, or client-server computing may be used.

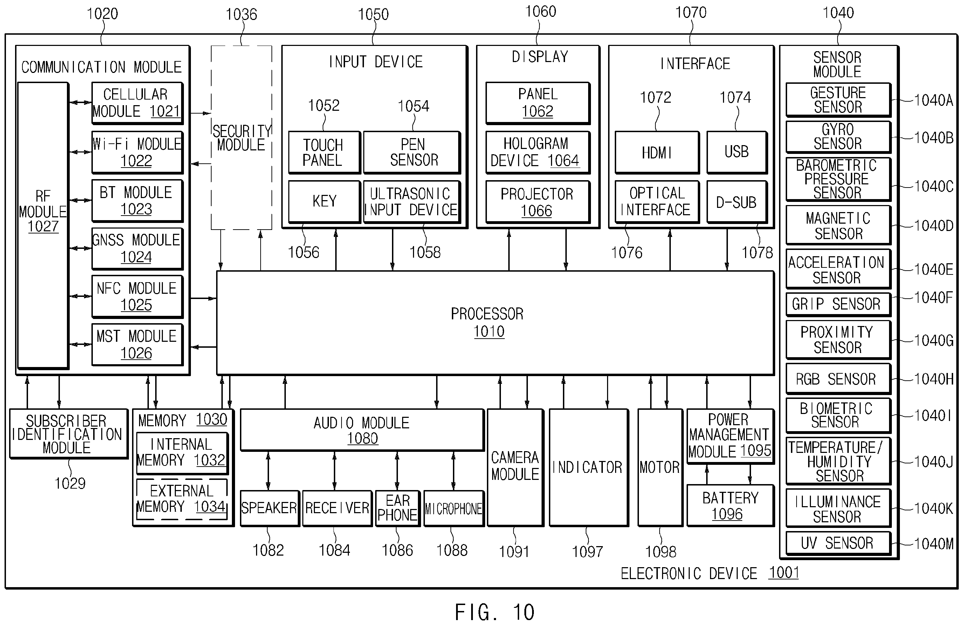

FIG. 10 is a block diagram illustrating an electronic device according to various examples.

Referring to FIG. 10, an electronic device 1001 may include, for example, all or a part of the electronic device 901 illustrated in FIG. 9. The electronic device 1001 may include one or more processors (e.g., an application processor (AP)) 1010, a communication module 1020, a subscriber identification module 1024, a memory 1030, a sensor module 1040, an input device 1050, a display 1060, an interface 1070, an audio module 1080, a camera module 1091, a power management module 1095, a battery 1096, an indicator 1097, and a motor 1098.

The processor 1010 may drive, for example, an operating system (OS) or an application to control a plurality of hardware or software components connected to the processor 1010 and may process and compute a variety of data. For example, the processor 1010 may be implemented with a System on Chip (SoC). According to an example, the processor 1010 may further include a graphic processing unit (GPU) and/or an image signal processor. The processor 1010 may include at least a part (e.g., a cellular module 1021) of components illustrated in FIG. 10. The processor 1010 may load a command or data, which is received from at least one of other components (e.g., a nonvolatile memory), into a volatile memory and process the loaded command or data. The processor 1010 may store a variety of data in the nonvolatile memory.

The communication module 1020 may be configured the same as or similar to the communication interface 970 of FIG. 9. The communication module 1020 may include the cellular module 1021, a Wi-Fi module 1022, a Bluetooth (BT) module 1023, a GNSS module 1024 (e.g., a GPS module, a Glonass module, a Beidou module, or a Galileo module), a near field communication (NFC) module 1025, a MST module 1026 and a radio frequency (RF) module 1027.

The cellular module 1021 may provide, for example, voice communication, video communication, a character service, an Internet service, or the like over a communication network. According to an example, the cellular module 1021 may perform discrimination and authentication of the electronic device 1001 within a communication network by using the subscriber identification module (e.g., a SIM card) 1029. According to an example, the cellular module 1021 may perform at least a portion of functions that the processor 1010 provides. According to an example, the cellular module 1021 may include a communication processor (CP).

Each of the Wi-Fi module 1022, the BT module 1023, the GNSS module 1024, the NFC module 1025, or the MST module 1026 may include a processor for processing data exchanged through a corresponding module, for example. According to an example, at least a part (e.g., two or more) of the cellular module 1021, the Wi-Fi module 1022, the BT module 1023, the GNSS module 1024, the NFC module 1025, or the MST module 1026 may be included within one Integrated Circuit (IC) or an IC package.

For example, the RF module 1027 may transmit and receive a communication signal (e.g., an RF signal). For example, the RF module 1027 may include a transceiver, a power amplifier module (PAM), a frequency filter, a low noise amplifier (LNA), an antenna, or the like. According to another example, at least one of the cellular module 1021, the Wi-Fi module 1022, the BT module 1023, the GNSS module 1024, the NFC module 1025, or the MST module 1026 may transmit and receive an RF signal through a separate RF module.

The subscriber identification module 1029 may include, for example, a card and/or embedded SIM that includes a subscriber identification module and may include unique identify information (e.g., integrated circuit card identifier (ICCID)) or subscriber information (e.g., international mobile subscriber identity (IMSI)).

The memory 1030 (e.g., the memory 930) may include an internal memory 1032 or an external memory 1034. For example, the internal memory 1032 may include at least one of a volatile memory (e.g., a dynamic random access memory (DRAM), a static RAM (SRAM), a synchronous DRAM (SDRAM), or the like), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory), or the like), a hard drive, or a solid state drive (SSD).

The external memory 1034 may further include a flash drive such as compact flash (CF), secure digital (SD), micro secure digital (Micro-SD), mini secure digital (Mini-SD), extreme digital (xD), a multimedia card (MMC), a memory stick, or the like. The external memory 1034 may be operatively and/or physically connected to the electronic device 1001 through various interfaces.

A security module 1036 may be a module that includes a storage space of which a security level is higher than that of the memory 1030 and may be a circuit that guarantees safe data storage and a protected execution environment. The security module 1036 may be implemented with a separate circuit and may include a separate processor. For example, the security module 1036 may be in a smart chip or a secure digital (SD) card, which is removable, or may include an embedded secure element (eSE) embedded in a fixed chip of the electronic device 1001. Furthermore, the security module 1036 may operate based on an operating system (OS) that is different from the OS of the electronic device 1001. For example, the security module 1036 may operate based on java card open platform (JCOP) OS.

The sensor module 1040 may measure, for example, a physical quantity or may detect an operation state of the electronic device 1001. The sensor module 1040 may convert the measured or detected information to an electric signal. For example, the sensor module 1040 may include at least one of a gesture sensor 1040A, a gyro sensor 1040B, a barometric pressure sensor 1040C, a magnetic sensor 1040D, an acceleration sensor 1040E, a grip sensor 1040F, the proximity sensor 1040G, a color sensor 1040H (e.g., red, green, blue (RGB) sensor), a biometric sensor 10401, a temperature/humidity sensor 1040J, an illuminance sensor 1040K, or an UV sensor 1040M. Although not illustrated, additionally or alternatively, the sensor module 1040 may further include, for example, an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 1040 may further include a control circuit for controlling at least one or more sensors included therein. According to an example, the electronic device 1001 may further include a processor that is a part of the processor 1010 or independent of the processor 1010 and is configured to control the sensor module 1040. The processor may control the sensor module 1040 while the processor 1010 remains at a sleep state.

The input device 1050 may include, for example, a touch panel 1052, a (digital) pen sensor 1054, a key 1056, or an ultrasonic input unit 1058. For example, the touch panel 1052 may use at least one of capacitive, resistive, infrared and ultrasonic detecting methods. Also, the touch panel 1052 may further include a control circuit. The touch panel 1052 may further include a tactile layer to provide a tactile reaction to a user.

The (digital) pen sensor 1054 may be, for example, a part of a touch panel or may include an additional sheet for recognition. The key 1056 may include, for example, a physical button, an optical key, a keypad, or the like. The ultrasonic input device 1058 may detect (or sense) an ultrasonic signal, which is generated from an input device, through a microphone (e.g., a microphone 1088) and may check data corresponding to the detected ultrasonic signal.

The display 1060 (e.g., the display 960) may include a panel 1062, a hologram device 1064, or a projector 1066. The panel 1062 may be the same as or similar to the display 960 illustrated in FIG. 9. The panel 1062 may be implemented, for example, to be flexible, transparent or wearable. The panel 1062 and the touch panel 1052 may be integrated into a single module. The hologram device 1064 may display a stereoscopic image in a space using a light interference phenomenon. The projector 1066 may project light onto a screen so as to display an image. For example, the screen may be arranged in the inside or the outside of the electronic device 1001. According to an example, the display 1060 may further include a control circuit for controlling the panel 1062, the hologram device 1064, or the projector 1066.

The interface 1070 may include, for example, a high-definition multimedia interface (HDMI) 1072, a universal serial bus (USB) 1074, an optical interface 1076, or a D-subminiature (D-sub) 1078. The interface 1070 may be included, for example, in the communication interface 970 illustrated in FIG. 9. Additionally or alternatively, the interface 1070 may include, for example, a mobile high definition link (MHL) interface, a SD card/multimedia card (MMC) interface, or an infrared data association (IrDA) standard interface.

The audio module 1080 may convert a sound and an electric signal in dual directions. At least a component of the audio module 1080 may be included, for example, in the input/output interface 950 illustrated in FIG. 9. The audio module 1080 may process, for example, sound information that is input or output through a speaker 1082, a receiver 1084, an earphone 1086, or the microphone 1088.

For example, the camera module 1091 may shoot a still image or a video. According to an example, the camera module 1091 may include at least one or more image sensors (e.g., a front sensor or a rear sensor), a lens, an image signal processor (ISP), or a flash (e.g., an LED or a xenon lamp).

The power management module 1095 may manage, for example, power of the electronic device 1001. According to an example, a power management integrated circuit (PMIC), a charger IC, or a battery or fuel gauge may be included in the power management module 1095. The PMIC may have a wired charging method and/or a wireless charging method. The wireless charging method may include, for example, a magnetic resonance method, a magnetic induction method or an electromagnetic method and may further include an additional circuit, for example, a coil loop, a resonant circuit, or a rectifier, and the like. The battery gauge may measure, for example, a remaining capacity of the battery 1096 and a voltage, current or temperature thereof while the battery is charged. The battery 1096 may include, for example, a rechargeable battery and/or a solar battery.

The indicator 1097 may display a specific state of the electronic device 1001 or a part thereof (e.g., the processor 1010), such as a booting state, a message state, a charging state, and the like. The motor 1098 may convert an electrical signal into a mechanical vibration and may generate the following effects: vibration, haptic, and the like. Although not illustrated, a processing device (e.g., a GPU) for supporting a mobile TV may be included in the electronic device 1001. The processing device for supporting the mobile TV may process media data according to the standards of digital multimedia broadcasting (DMB), digital video broadcasting (DVB), MediaFlo™, or the like.

Each of the above-mentioned components of the electronic device according to various examples of the disclosure may be configured with one or more parts, and the names of the components may be changed according to the type of the electronic device. In various examples, the electronic device may include at least one of the above-mentioned components, and some components may be omitted or other additional components may be added. Furthermore, some of the components of the electronic device according to various examples may be combined with each other so as to form one entity, so that the functions of the components may be performed in the same manner as before the combination.

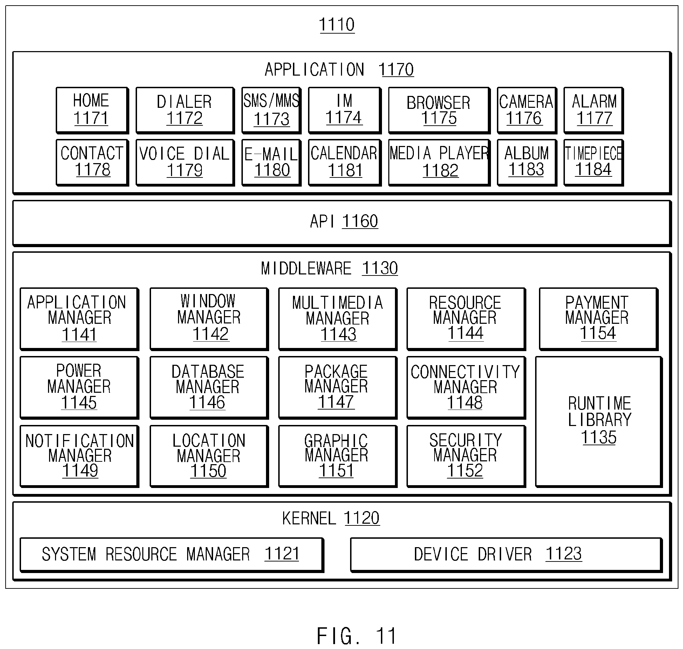

FIG. 11 is a block diagram illustrating a program module, according to various examples.

According to an example, a program module 1110 (e.g., the program 940) may include an operating system (OS) to control resources associated with an electronic device (e.g., the electronic device 901), and/or diverse applications (e.g., the application program 947) driven on the OS. The OS may be, for example, Android™, iOS™, Windows™, Symbian™, or Tizen™.

The program module 1110 may include a kernel 1120, a middleware 1130, an application programming interface (API) 1160, and/or an application 1170. At least a portion of the program module 1110 may be preloaded on an electronic device or may be downloadable from an external electronic device (e.g., the first electronic device 902, the second electronic device 904, the server 906, or the like).

The kernel 1120 (e.g., the kernel 941) may include, for example, a system resource manager 1121 or a device driver 1123. The system resource manager 1121 may perform control, allocation, or retrieval of system resources. According to an example, the system resource manager 1121 may include a process managing unit, a memory managing unit, or a file system managing unit. The device driver 1123 may include, for example, a display driver, a camera driver, a Bluetooth driver, a shared memory driver, a USB driver, a keypad driver, a Wi-Fi driver, an audio driver, or an inter-process communication (IPC) driver.

The middleware 1130 may provide, for example, a function that the application 1170 needs in common, or may provide diverse functions to the application 1170 through the API 1160 to allow the application 1170 to efficiently use limited system resources of the electronic device. According to an example, the middleware 1130 (e.g., the middleware 943) may include at least one of a runtime library 1135, an application manager 1141, a window manager 1142, a multimedia manager 1143, a resource manager 1144, a power manager 1145, a database manager 1146, a package manager 1147, a connectivity manager 1148, a notification manager 1149, a location manager 1150, a graphic manager 1151, a security manager 1152, or a payment manager 1154.

The runtime library 1135 may include, for example, a library module that is used by a compiler to add a new function through a programming language while the application 1170 is being executed. The runtime library 1135 may perform input/output management, memory management, or capacities about arithmetic functions.

The application manager 1141 may manage, for example, a life cycle of at least one application of the application 1170. The window manager 1142 may manage a graphic user interface (GUI) resource that is used in a screen. The multimedia manager 1143 may identify a format necessary for playing diverse media files, and may perform encoding or decoding of media files by using a codec suitable for the format. The resource manager 1144 may manage resources such as a storage space, memory, or source code of at least one application of the application 1170.

The power manager 1145 may operate, for example, with a basic input/output system (BIOS) to manage a battery or power, and may provide power information for an operation of an electronic device. The database manager 1146 may generate, search for, or modify database that is to be used in at least one application of the application 1170. The package manager 1147 may install or update an application that is distributed in the form of package file.

The connectivity manager 1148 may manage, for example, wireless connection such as Wi-Fi or Bluetooth. The notification manager 1149 may display or notify an event such as arrival message, appointment, or proximity notification in a mode that does not disturb a user. The location manager 1150 may manage location information about an electronic device. The graphic manager 1151 may manage a graphic effect that is provided to a user, or manage a user interface relevant thereto. The security manager 1152 may provide a general security function necessary for system security, user authentication, or the like. According to an example, in the case where an electronic device (e.g., the electronic device 901) includes a telephony function, the middleware 1130 may further include a telephony manager for managing a voice or video call function of the electronic device.

The middleware 1130 may include a middleware module that combines diverse functions of the above-described components. The middleware 1130 may provide a module specialized to each OS kind to provide differentiated functions. Additionally, the middleware 1130 may dynamically remove a part of the preexisting components or may add new components thereto.

The API 1160 (e.g., the API 945) may be, for example, a set of programming functions and may be provided with a configuration that is variable depending on an OS. For example, in the case where an OS is Android™ or iOS™, it may provide one API set per platform. In the case where an OS is Tizen™, it may provide two or more API sets per platform.

The application 1170 (e.g., the application program 947) may include, for example, one or more applications capable of providing functions for a home 1171, a dialer 1172, an SMS/MMS 1173, an instant message (IM) 1174, a browser 1175, a camera 1176, an alarm 1177, a contact 1178, a voice dial 1179, an e-mail 1180, a calendar 1181, a media player 1182, an album 1183, or a timepiece 1184, or for offering health care (e.g., measuring an exercise quantity, blood sugar, or the like) or environment information (e.g., information of barometric pressure, humidity, temperature, or the like).

According to an example, the application 1170 may include an application (hereinafter referred to as "information exchanging application" for descriptive convenience) to support information exchange between an electronic device (e.g., the electronic device 901) and an external electronic device (e.g., the first electronic device 902 or the second electronic device 904). The information exchanging application may include, for example, a notification relay application for transmitting specific information to an external electronic device, or a device management application for managing the external electronic device.

For example, the notification relay application may include a function of transmitting notification information, which arise from other applications (e.g., applications for SMS/MMS, e-mail, health care, or environmental information), to an external electronic device. Additionally, the notification relay application may receive, for example, notification information from an external electronic device and provide the notification information to a user.

The device management application may manage (e.g., install, delete, or update), for example, at least one function (e.g., turn-on/turn-off of an external electronic device itself (or a part) or adjustment of brightness (or resolution) of a display) of the external electronic device which communicates with the electronic device, an application running in the external electronic device, or a service (e.g., a call service, a message service, or the like) provided from the external electronic device.

According to an example, the application 1170 may include an application (e.g., a health care application of a mobile medical device) that is assigned in accordance with an attribute of an external electronic device. According to an example, the application 1170 may include an application that is received from an external electronic device (e.g., the first electronic device 902, the second electronic device 904, or the server 906). According to an example, the application 1170 may include a preloaded application or a third party application that is downloadable from a server. The names of components of the program module 1110 according to the example may be modifiable depending on kinds of operating systems.

According to various examples, at least a portion of the program module 1110 may be implemented by software, firmware, hardware, or a combination of two or more thereof. At least a portion of the program module 1110 may be implemented (e.g., executed), for example, by the processor (e.g., the processor 1010). At least a portion of the program module 1110 may include, for example, modules, programs, routines, sets of instructions, processes, or the like for performing one or more functions.

The term "module" used in the disclosure may represent, for example, a unit including one or more combinations of hardware, software and firmware. The term "module" may be interchangeably used with the terms "unit", "logic", "logical block", "part" and "circuit". The "module" may be a minimum unit of an integrated part or may be a part thereof. The "module" may be a minimum unit for performing one or more functions or a part thereof. The "module" may be implemented mechanically or electronically. For example, the "module" may include at least one of an application-specific IC (ASIC) chip, a field-programmable gate array (FPGA), and a programmable-logic device for performing some operations, which are known or will be developed.

At least a part of an apparatus (e.g., modules or functions thereof) or a method (e.g., operations) according to various examples may be, for example, implemented by instructions stored in a computer-readable storage media in the form of a program module. The instruction, when executed by a processor (e.g., the processor 920), may cause the one or more processors to perform a function corresponding to the instruction. The computer-readable storage media, for example, may be the memory 930.

A computer-readable recording medium may include a hard disk, a floppy disk, a magnetic media (e.g., a magnetic tape), an optical media (e.g., a compact disc read only memory (CD-ROM) and a digital versatile disc (DVD), a magneto-optical media (e.g., a floptical disk)), and hardware devices (e.g., a read only memory (ROM), a random access memory (RAM), or a flash memory). Also, the one or more instructions may contain a code made by a compiler or a code executable by an interpreter. The above hardware unit may be configured to operate via one or more software modules for performing an operation according to various examples, and vice versa.

A module or a program module according to various examples may include at least one of the above components, or a part of the above components may be omitted, or additional other components may be further included. Operations performed by a module, a program module, or other components according to various examples may be executed sequentially, in parallel, repeatedly, or in a heuristic method. In addition, some operations may be executed in different sequences or may be omitted. Alternatively, other operations may be added.

While the disclosure has been shown and described with reference to various examples thereof, it will be understood by those skilled in the art that various changes in form and details may be made.

The scope of the invention is defined by the appended claims. Z

## Claims

1. An electronic device for a vehicle, the electronic device comprising:
a sensor connected to a plurality of displays, and
a processor connected to the sensor and the plurality of displays,
wherein the processor is configured to, when information indicating that an error occurs in a first display among the plurality of displays is obtained from the sensor, output first information to be output through the first display through a display having higher priority among remaining displays other than the first display,
wherein the processor is configured to output the first information through the display having higher priority in a pop-up form corresponding to a driving situation, and
wherein the priority of the remaining displays other than the first display is higher for a display closer to the field of vision of the driver.

2. The electronic device of claim 1, wherein the processor is configured to convert information to be output through the plurality of displays to a voice signal and output the voice signal through an audio device when information indicating that the error occurs in the plurality of displays is obtained.

3. The electronic device of claim 2, wherein the processor is configured to allow the audio device to output voice signals in a descending order of priority.

4. The electronic device of claim 1, wherein the processor is configured to measure a magnitude of a current input to the first display through the sensor and obtain the information indicating that the error occurs in the first display based on the measured magnitude of the current.

5. The electronic device of claim 1, further comprising:
a communication circuit configured to communicate with the first display,
wherein the processor is configured to obtain the information indicating that the error occurs in the first display based on intensity of a signal received through the communication circuit.

6. The electronic device of claim 1, further comprising:
an internal camera configured to obtain an image of the first display,
wherein the processor is configured to obtain the information indicating that the error occurs in the first display based on the image.

7. The electronic device of claim 1, wherein the processor is configured to obtain the information indicating that the error occurs in the first display in accordance with a specified period.

8. The electronic device of claim 1, wherein the first display corresponds to a digital cluster, and
wherein the processor is configured to output the first information through a center information display (CID) when obtaining information indicating that the error occurs in the digital cluster.

9. The electronic device of claim 8, wherein the processor is configured to allow the CID to output at least one of a speed of the vehicle, revolutions per minute (RPM) of an engine, an amount of remaining fuel, and whether the vehicle is defective.

10. The electronic device of claim 1, wherein the first display corresponds to a center information display (CID), and
wherein the processor is configured to output the first information through a digital cluster when obtaining information indicating that the error occurs in the CID.

11. The electronic device of claim 10, wherein the processor is configured to allow the digital cluster to output at least one of a location of the vehicle and information about an obstacle located in a periphery of the vehicle.

12. The electronic device of claim 1, wherein the first display corresponds to a digital cluster, and
wherein the processor is configured to output the first information through a head-up display (HUD) when obtaining information indicating that an error occurs in the digital cluster.

13. The electronic device of claim 1, further comprising:
an external camera configured to obtain an image of an obstacle located in a periphery of the vehicle,
wherein the processor is configured to control the first display to output the image of the obstacle obtained through the external camera.

14. The electronic device of claim 1, wherein the processor is configured to output the first information to a specified area of a display having the higher priority.

15. The electronic device of claim 1, wherein the processor is configured to output the first information through a display having the higher priority at a time when the first information is output when the error does not occur in the first display.

## Patentansprüche

1. Elektronische Vorrichtung für ein Fahrzeug, die elektronische Vorrichtung umfassend:
einen Sensor, der mit einer Vielzahl von Anzeigen verbunden ist, und
einen Prozessor, der mit dem Sensor und der Vielzahl von Anzeigen verbunden ist, wobei der Prozessor dazu konfiguriert ist, wenn Informationen, die angeben, dass ein Fehler in einer ersten Anzeige unter der Vielzahl von Anzeigen auftritt, von dem Sensor erhalten werden, erste Informationen, die über die erste Anzeige ausgegeben werden sollen, über eine Anzeige auszugeben, die eine höhere Priorität unter den verbleibenden Anzeigen außer der ersten Anzeige hat,
wobei der Prozessor dazu konfiguriert ist, die ersten Informationen über die Anzeige mit höherer Priorität in einer Aufklapp-Form entsprechend einer Fahrsituation auszugeben, und
wobei die Priorität der verbleibenden Anzeigen außer der ersten Anzeige höher ist für eine Anzeige, die näher am Sichtfeld des Fahrers liegt.

2. Elektronische Vorrichtung nach Anspruch 1, wobei der Prozessor dazu konfiguriert ist, über die Vielzahl von Anzeigen auszugebende Informationen in ein Sprachsignal umzuwandeln und das Sprachsignal über ein Audiogerät auszugeben, wenn Informationen erhalten werden, die angeben, dass der Fehler in der Vielzahl von Anzeigen auftritt.

3. Elektronische Vorrichtung nach Anspruch 2, wobei der Prozessor dazu konfiguriert ist, es dem Audiogerät zu ermöglichen, Sprachsignale in einer absteigenden Prioritätsreihenfolge auszugeben.

4. Elektronische Vorrichtung nach Anspruch 1, wobei der Prozessor dazu konfiguriert ist, eine Größe eines Stromeingangs zur ersten Anzeige durch den Sensor zu messen und die Informationen zu erhalten, die basierend auf der gemessenen Stromstärke angeben, dass der Fehler in der ersten Anzeige auftritt.

5. Elektronische Vorrichtung nach Anspruch 1, ferner umfassend:
eine Kommunikationsschaltung, die dazu konfiguriert ist, mit der ersten Anzeige zu kommunizieren,
wobei der Prozessor dazu konfiguriert ist, die Informationen zu erhalten, die basierend auf der Stärke eines durch die Kommunikationsschaltung empfangenen Signals angeben, dass der Fehler in der ersten Anzeige auftritt.

6. Elektronische Vorrichtung nach Anspruch 1, ferner umfassend:
eine interne Kamera, die dazu konfiguriert ist, ein Bild der ersten Anzeige zu erhalten,
wobei der Prozessor dazu konfiguriert ist, die Informationen zu erhalten, die basierend auf dem Bild angeben, dass der Fehler in der ersten Anzeige auftritt.

7. Elektronische Vorrichtung nach Anspruch 1, wobei der Prozessor dazu konfiguriert ist, die Informationen zu erhalten, die angeben, dass der Fehler in der ersten Anzeige gemäß einem spezifizierten Zeitraum auftritt.

8. Elektronische Vorrichtung nach Anspruch 1, wobei die erste Anzeige einer digitalen Gruppe entspricht, und
wobei der Prozessor dazu konfiguriert ist, die ersten Informationen über eine zentrale Informationsanzeige (CID) auszugeben, wenn Informationen erhalten werden, die angeben, dass der Fehler in der digitalen Gruppe auftritt.

9. Elektronische Vorrichtung nach Anspruch 8, wobei der Prozessor dazu konfiguriert ist, es dem CID zu ermöglichen, mindestens eine auszugeben von einer Geschwindigkeit des Fahrzeugs, Umdrehungen pro Minute (U/min) eines Motors, einer verbleibenden Kraftstoffmenge und ob das Fahrzeug defekt ist.

10. Elektronische Vorrichtung nach Anspruch 1, wobei die erste Anzeige einer zentralen Informationsanzeige (CID) entspricht, und
wobei der Prozessor dazu konfiguriert ist, die ersten Informationen über eine digitale Gruppe auszugeben, wenn er Informationen erhält, die angeben, dass der Fehler in der CID auftritt.

11. Elektronische Vorrichtung nach Anspruch 10, wobei der Prozessor dazu konfiguriert ist, der digitalen Gruppe zu ermöglichen, mindestens eine/n auszugeben von einem Standort des Fahrzeugs und Informationen über ein Hindernis, das sich in einer Umgebung des Fahrzeugs befindet.

12. Elektronische Vorrichtung nach Anspruch 1, wobei die erste Anzeige einer digitalen Gruppe entspricht, und
wobei der Prozessor dazu konfiguriert ist, die ersten Informationen über eine Head-Up-Anzeige (HUD) auszugeben, wenn Informationen erhalten werden, die angeben, dass ein Fehler in der digitalen Gruppe auftritt.

13. Elektronische Vorrichtung nach Anspruch 1, ferner umfassend:
eine externe Kamera, die dazu konfiguriert ist, ein Bild eines Hindernisses zu erhalten, das sich in einer Umgebung des Fahrzeugs befindet,
wobei der Prozessor dazu konfiguriert ist, die erste Anzeige zu steuern, das durch die externe Kamera erhaltene Bild des Hindernisses auszugeben.

14. Elektronische Vorrichtung nach Anspruch 1, wobei der Prozessor dazu konfiguriert ist, die ersten Informationen an einen spezifizierten Bereich einer Anzeige mit der höheren Priorität auszugeben.

15. Elektronische Vorrichtung nach Anspruch 1, wobei der Prozessor dazu konfiguriert ist, die ersten Informationen über eine Anzeige mit der höheren Priorität zu einem Zeitpunkt auszugeben, wenn die ersten Informationen ausgegeben werden, wenn der Fehler nicht in der ersten Anzeige auftritt.

## Revendications

1. Dispositif électronique pour un véhicule, le dispositif électronique comprenant :
un capteur connecté à une pluralité d'affichages, et
un processeur connecté au capteur et à la pluralité d'affichages,
dans lequel le processeur est configuré pour, lorsque des informations indiquant qu'une erreur se produit sur un premier affichage parmi la pluralité d'affichages est obtenue en provenance du capteur, sortir des premières informations devant être sorties via le premier affichage via un affichage ayant une priorité plus élevée parmi les affichages restants autres que le premier affichage,
dans lequel le processeur est configuré pour sortir les premières informations via l'affichage ayant une priorité plus élevée sous une forme surgissante correspondant à une situation de conduite, et
dans lequel la priorité des affichages restants autres que le premier affichage est plus élevée pour un affichage plus proche du champ de vision du conducteur.

2. Dispositif électronique selon la revendication 1, dans lequel le processeur est configuré pour convertir les informations devant être sorties via la pluralité d'affichages en un signal vocal et sortir le signal vocal via un dispositif audio lorsque des informations indiquant que l'erreur se produit sur la pluralité d'affichages sont obtenues.

3. Dispositif électronique selon la revendication 2, dans lequel le processeur est configuré pour permettre au dispositif audio de sortir des signaux vocaux dans un ordre de priorité décroissant.

4. Dispositif électronique selon la revendication 1, dans lequel le processeur est configuré pour mesurer une amplitude d'un courant entré dans le premier affichage via le capteur et obtenir les informations indiquant que l'erreur se produit sur le premier affichage sur la base de l'amplitude mesurée du courant.

5. Dispositif électronique selon la revendication 1, comprenant en outre :
un circuit de communication configuré pour communiquer avec le premier affichage,
dans lequel le processeur est configuré pour obtenir les informations indiquant que l'erreur se produit sur le premier affichage sur la base de l'intensité d'un signal reçu via le circuit de communication.

6. Dispositif électronique selon la revendication 1, comprenant en outre :
une caméra interne configurée pour obtenir une image du premier affichage,
dans lequel le processeur est configuré pour obtenir les informations indiquant que l'erreur se produit sur le premier affichage sur la base de l'image.

7. Dispositif électronique selon la revendication 1, dans lequel le processeur est configuré pour obtenir les informations indiquant que l'erreur se produit sur le premier affichage en fonction d'une période spécifiée.

8. Dispositif électronique selon la revendication 1, dans lequel le premier affichage correspond à un groupe numérique, et
dans lequel le processeur est configuré pour sortir les premières informations via un affichage d'informations centralisé (CID) lors de l'obtention d'informations indiquant que l'erreur se produit dans le groupe numérique.

9. Dispositif électronique selon la revendication 8, dans lequel le processeur est configuré pour permettre au CID de sortir au moins l'un parmi une vitesse du véhicule, des tours par minute (RPM) d'un moteur, une quantité de carburant restant, et si le véhicule présente un défaut.

10. Dispositif électronique selon la revendication 1, dans lequel le premier affichage correspond à un affichage d'informations centralisé (CID), et
dans lequel le processeur est configuré pour sortir les premières informations via un groupe numérique lors de l'obtention d'informations indiquant que l'erreur se produit sur le CID.

11. Dispositif électronique selon la revendication 10, dans lequel le processeur est configuré pour permettre au groupe numérique de sortir au moins l'une d'une localisation du véhicule et d'informations sur un obstacle situé en périphérie du véhicule.

12. Dispositif électronique selon la revendication 1, dans lequel le premier affichage correspond à un groupe numérique, et
dans lequel le processeur est configuré pour sortir les premières informations via un affichage tête haute (HUD) lors de l'obtention d'informations indiquant qu'une erreur se produit dans le groupe numérique.

13. Dispositif électronique selon la revendication 1, comprenant en outre :
une caméra externe configurée pour obtenir une image d'un obstacle situé en périphérie du véhicule,
dans lequel le processeur est configuré pour commander au premier affichage de sortir l'image de l'obstacle obtenue via la caméra externe.

14. Dispositif électronique selon la revendication 1, dans lequel le processeur est configuré pour sortir les premières informations sur une zone d'affichage spécifiée ayant la priorité plus élevée.

15. Dispositif électronique selon la revendication 1, dans lequel le processeur est configuré pour sortir les premières informations via un affichage ayant la priorité plus élevée à un moment où les premières informations sont sorties lorsque l'erreur ne se produit pas sur le premier affichage.
